# EUROPÄISCHE PATENTSCHRIFT

(11) **EP 1 664 713 B1**
(45) Veröffentlichungstag und Bekanntmachung des Hinweises auf die Patenterteilung: **16.01.2008**
(21) Anmeldenummer: 04763866.3
(22) Anmeldetag: 06.08.2004
(51) Int. Cl.: G01L 19/06, F01N 3/20

(54) **FROSTSICHERER FLÜSSIGKEITSDRUCKSENSOR FÜR ABGASREDUZIERSYSTEME (DIESELMOTOR)**
FROST-RESISTANT LIQUID PRESSURE SENSOR FOR EXHAUST REDUCING SYSTEMS (DIESEL ENGINE)
CAPTEUR DE PRESSION FLUIDIQUE RESISTANT AU GEL POUR DES SYSTEMES DE REDUCTION DE GAZ D'ECHAPPEMENT (MOTEUR DIESEL)

(30) Priorität: 30.08.2003 DE 10340075
(43) Veröffentlichungstag der Anmeldung: 07.06.2006
(73) Patentinhaber: Hydraulik-Ring GmbH, 97828 Marktheidenfeld (DE)
(72) Erfinder: BLEECK, Mathias, 63739 Aschaffenburg (DE); ZAPF, Friedrich, 97753 Karlstadt (DE); KNOBLACH, Thomas, 97737 Gemünden-Langenprozelten (DE); OBERMEIER, Horst, c/o Kavlico GmbH, 32423 Minden (DE); SCHLÜTER, Siegmund, c/o Kavlico GmbH, 32423 Minden (DE)
(74) Vertreter: Cremer & Cremer
(86) Internationale Anmeldenummer: PCT/EP2004/008831
(87) Internationale Veröffentlichungsnummer: WO 2005/029029

(56) Entgegenhaltungen:
- WO-A-01/57488
- WO-A-01/88497
- WO-A-02/44542
- WO-A-03/050416
- US-A- 5 792 958

## Beschreibung

Die Erfindung betrifft einen Drucksensor für Abgasreduziersysteme, insbesondere von Dieselmotoren, nach dem Oberbegriff des Anspruchs 1.

Aus der WO 01/57488 A1 und der WO 03/050416 A1 ist die Verwendung von topfförmig arrangierten Keramikdrucksensoren zur Messung des Drucks einer Harnstoff-Wasser-Lösung, insbesondere als Teil eines Kfz-Systems, bekannt. Zum einen wird das Volumen für das zu messende Medium vor dem Sensor möglichst weit reduziert. Volumenausdehnungen, die im hundertstel mm-Bereich liegen können, werden durch eine axiale Ausgleichbewegung entweder des Drucksensors selbst oder des mittig dazwischen liegenden Stützkörpers abgefangen. Sonst ist aus der WO 02/44542 A1 bekannt, dass durch die Schaffung eines abgegrenzten Volumens eine Ausmittlung der tatsächlich herrschenden Druckverhältnisse möglich ist. Wie aus der WO 01/57488 A1 zu entnehmen ist, sollte die Belastung für den Drucksensor aufgrund des Gefrierens der Hamstoff-Wasser-Lösung möglichst gering sein. Eine weitergehende Problematik besteht in der zuverlässigen Abdichtung des Harnstoff-Wasser-Systems gegenüber der Umwelt.

Solche Drucksensoren werden bei Abgasreduziersystemen für Dieselmotoren in Kraftfahrzeugen eingesetzt. Mit dem Drucksensor wird der Druck des Abgasreduziermediums gemessen, das vorzugsweise eine Harnstoff-Wasser-Lösung ist. Sie kann bei tiefen Temperaturen einfrieren (Gefriertemperatur -11°C). Dabei dehnt sich die Lösung aus, wodurch die im Gehäuse des Drucksensors untergebrachte Messzelle beschädigt wird.

Der Erfindung liegt die Aufgabe zugrunde, den gattungsgemäßen Drucksensor so auszubilden, dass eine Beschädigung des Drucksensors durch ein Einfrieren des Abgasreduziermediums zuverlässig vermieden wird.

Diese Aufgabe wird durch einen Drucksensor für Abgasreduziersysteme, insbesondere von Dieselmotoren, mit einem Gehäuse, in dem mindestens eine Messzelle untergebracht ist, und mit wenigstens einer Zuleitung für ein Abgasreduziermedium, vorzugsweise eine Harnstoff-Wasser-Lösung, gelöst, wobei zwischen der Messzelle und der Zuleitung ein komprimierbares Volumen vorgesehen ist, das eine Volumenänderung des Abgasreduziennediums beim Einführen aufnimmt.

Die vorliegende Erfindung betrifft ferner einen Drucksensor für Abgasreduziersysteme, insbesondere von Dieselmotoren, mit einem Gehäuse, in dem mindestens eine Messzelle untergebracht ist, und mit wenigstens einer Zuleitung für ein Abgasreduziermedium, vorzugsweise eine Harnstoff-Wasser-Lösung, welcher dadurch gekennzeichnet ist, dass zwischen der Messzelle und der Zuleitung ein Balg vorgesehen ist, welcher an ein komprimierbares Volumen grenzt, das eine Volumenänderung des Abgasreduziermediums beim Einfrieren aufnimmt.

Der Balg ist grundsätzlich aus jedem umformbaren Material herstellbar. Das Balgmaterial wird bevorzugt ausgewählt aus der Gruppe: Metall, Kunststoff oder Gummi. Bevorzugt kommt jedoch Metall als Balgmaterial zur Anwendung, besonders bevorzugt Metall mit der Werkstoffnummer 1.4310 oder 1.4303, welche beide in der DIN 17440 genormt sind. Das Balgmaterial, wie auch alle anderen Materialien des Drucksensors, welche mit dem Abgasreduziermedium in Kontakt kommen, sollten zudem eine ausreichende Beständigkeit gegenüber dem Abgasreduziermedium aufweisen. Im Fall einer Harnstoff Wasser-Lösung als Abgasreduziermedium, sollten folgende Materialien nicht zur Anwendung kommen: Kupfer, kupferhaltige Legierungen sowie unlegierte und verzinkte Stähle.

Der Balg ist hinsichtlich seiner Abmessungen und der Wahl des Materials, insbesondere hinsichtlich der Materialeigenschaften wie E-Modul und Spannungszustand, vorzugsweise so ausgelegt, dass bis zum Erreichen des Betriebsdruckes (ca. 5 - 6 bar absolut) keine Verformung des Balges auftritt. Dies wird unter anderem durch ein Gleichgewicht der Spannungszustände innerhalb des Balgmaterials erreicht. Bei Überschreitung des Betriebsdruckes, beispielsweise beim Einfrieren des Abgasreduziermediums, beginnt sich das Balgmaterial elastisch zu verformen, wodurch das im Balg eingeschlossene (geschlossener Balg) oder das den Balg umgebende (offener Balg) Fluid, vorzugsweise Luft, komprimiert wird. Diese elastische Verformung des Balgmaterials in Verbindung mit einer Fluidkomprimierung schützt die Messzelle vor Beschädigung bzw. Zerstörung.

Hinsichtlich weiterer erfindungsgemäß möglicher Ausführungsform des Balges, wird an dieser Stelle auf "Das Handbuch der Metallbälge" der Witzenmann GmbH, Metallschlauch-Fabrik Pforzheim, erschienen im Labhard Verlag Konstanz, verwiesen, insbesondere auf die Seiten 28, 29, 36, 37 und 46 bis 49, welche vollumfänglich in den Kontext der vorliegenden Beschreibung mit einzubeziehen sind.

Bei der Messzelle kann es sich grundsätzlich um alle bekannten Absolut-und/oder Relativdruckmesssensoren handeln. Beispielhaft seien an dieser Stelle auch Dehnungsmessstreifen genannt, welche ebenso zum Einsatz kommen können.

Des Weiteren ist eine mehrteilige Ausführungsform des Balges denkbar, welche die Montage und Demontage des Drucksensors erleichtert.

Der Balg ist vorzugsweise mit einer seiner offenen Seiten mit der Messzelle und mit der gegenüberliegenden zweiten offenen Seite mit dem Gehäuse, vorzugsweise mittels einer Schweißstelle, beispielsweise einer fluiddichten, umlaufenden Schweißnaht, verbunden. Dabei ist das Äußere des Balges sowie der Messzelle vorzugsweise mit Luft umgeben.

Die Dimensionierung der Zuleitung des Drucksensors für das Abgasreduziermedium ist vorzugsweise derart minimiert, dass kein Durchfluß des Abgasreduziermediums, aber ein Volumenaustausch mit dem bzw. ein Druckaufbau im Drucksensor, möglich ist.

In einer vorteilhaften Ausführungsform des erfindungsgemäßen Drucksensors ist zwischen Messzelle und Balg eine Befestigung und/oder Aufnahme vorgesehen. Die Befestigung und/oder die Aufnahme weisen dabei bevorzugt durchgehende Ausnehmungen, beispielsweise in Form von Durchgangsbohrungen, auf. Diese Ausnehmungen ermöglichen es dem Abgasreduziermedium an der Befestigung und/oder Aufnahme vorbei an die Messzelle zu gelangen. Der Abstand zwischen Befestigung und/oder Aufnahme und Messzelle ist dabei bevorzugt so gering wie nur möglich, sodass gerade noch eine Druckübertragung zur Messzelle erfolgen kann. Beim Einfrieren des Abgasreduziermediums dehnt sich ein solcher Fluidfilm nicht so stark aus, dass eine Volumenzunahme auftritt, die nicht mehr durch elastische Verformung des Balges verbunden mit Komprimierung von vorzugsweise gasförmigem Fluid aufgenommen werden kann. Die Gefahr einer Beschädigung bzw. Zerstörung der Messzelle wird somit minimiert bzw. ausgeschlossen.

Weiterhin kann die Aufnahme des Drucksensors eine umlaufende Nut zur Fluidführung aufweisen. Diese Ausführungsform ist insbesondere dann von Vorteil, wenn die Gefahr besteht, dass sich die Längsachse der Bohrungen von Befestigung und Aufnahme, welche grundsätzlich zueinander fluchtend ausgerichtet sind, im Betrieb zueinander verdrehen.

In einer weiteren vorteilhaften Ausführungsform des Drucksensors sind Mittel zur Hubbegrenzung, insbesondere zum Schutz des Balges, vorgesehen. Diese Hubbegrenzungen sind bevorzugt innerhalb des Balges vorgesehen, wobei ein Teil der Hubbegrenzung den Balg einseitig verschließt. Von diesem Teil ausgehend ragt ein weiterer Teil der Hubbegrenzung in den Balg hinein in Richtung der zweiten Öffnung des Balges, welche beispielsweise mit der Aufnahme verbunden ist. Die Aufnahme bildet somit den Anschlag für die Hubbegrenzung. In der Aufnahme kann zur besseren Führung der Hubbegrenzung und/oder zur Bestimmung der Hublänge eine Ausnehmung vorgesehen sein.

In einer weiteren bevorzugten Ausführungsform des Drucksensors ist wenigstens eine Öffnung des Balges mit einer diese Öffnung fluiddicht verschließenden Platte versehen. Diese Platte ist vorzugsweise mit dem Balg verschweißt. Das Plattenmaterial entspricht dabei bevorzugt dem des Balges. Diese Platte sollte zudem eine höhere Steifigkeit als der Balg aufweisen, beispielsweise hat die Platte eine größere Dicke als die Balgwand. Die Platte kann ferner Einrichtungen zur Fixierung einer Feder aufweisen, welche sich vorzugsweise innerhalb des Balges befinden und sich mit ihrem einen Ende auf der Platte abstützen.

Sind beide Öffnungen des Balges verschlossen, befindet sich im Balg vorzugsweise ein komprimierbares Fluid, wie beispielsweise Luft. Die Menge des Fluids ist dabei so zu bemessen, dass eine ausreichende Komprimierbarkeit bei entsprechender Betriebsdrucktiberschreitung gegeben ist und keine Beeinträchtigung der Messzelle auftritt.
Erfindungsgemäß kann der Drucksensor zudem wenigstens eine Feder aufweisen. Diese Feder ist vorzugsweise zwischen der Aufnahme und dem Mittel zur Hubbegrenzung oder zwischen der Aufnahme und der Platte innerhalb des Balges vorgesehen. Eine solche Feder kann alternativ oder zusätzlich auch zwischen Messzelle und Gehäuse vorgesehen sein. Die Feder wird bevorzugt mit Vorspannung montiert, wobei die Vorspannung gerade so groß ist, dass keine Verformung des Balges bzw. einer alternativ vorgesehenen Membran vor Erreichen des Betriebsdruckes auftritt. Bei der Feder kann es sich grundsätzlich um alle bekannten Federarten handeln. Vorzugsweise kommt eine Spiralfeder aus Metall zum Einsatz. Denkbar wäre auch eine Gasfeder.

In einer weiteren Ausgestaltung des erfindungsgemäßen Drucksensors ist der Balg mit seiner der Zuleitung zugewandten Öffnung kraft- oder formschlüssig mit dem Gehäuse fluiddicht, beispielsweise mittels einer Schweißnaht, verbunden.

An Stelle des Balges oder zusätzlich zum Balg kann in einer weiteren Ausführungsform eine Membran vorgesehen sein.

Bei weiteren Ausgestaltungen des erfindungsgemäßen Drucksensors ist das komprimierbare Volumen durch wenigstens eine Membran vom Abgasreduziermedium getrennt, wobei das komprimierbare Volumen ein Gasvolumen, vorzugsweise Luft, ist. Das komprimierbare Volumen ist dabei vorzugsweise von der Messzelle und der Membran begrenzt. Zudem kann die Membran mit Abstand zur Mündung der Zuleitung vorgesehen sein. Die Zuleitung ist dabei bevorzugt mittig zur gegenüberliegenden Membranfläche angeordnet. Die Membran liegt zudem bevorzugt mit einem verstärkten Rand an einer Innenwand des Gehäuses an. Weiterhin kann die Membran durch wenigstens ein Halteteil gesichert sein, wobei das Halteteil beispielsweise ein Haltering ist. Der Drucksensor ist darüber hinaus dadurch charakterisiert, dass das Halteteil die Membran im Gehäuse zentriert, wobei das Halteteil zudem durch wenigstens ein Sicherungselement, vorzugsweise einen Sicherungsring, gesichert ist. Eine Abdichtung wird vorzugsweise durch axiale Verpressung der Membran erreicht. Die Membran kann ferner auf einem Absatz eines Bodens eines das komprimierbare Volumen enthaltenden Aufnahmeraums aufliegen.

Das Gehäuse des Drucksensors wird vorzugsweise als Tiefziehteil oder Drehteil hergestellt, welches wenigstens einen Gewindeabschnitt zum Integrieren des Drucksensors in ein Abgasreduziersystem aufweist. Dieser Gewindeabschnitt weist bevorzugt eine Nut auf, welche zur Aufnahme eines Dichtungsringes, beispielsweise in Form eines O-Ringes, geeignet ist.

Die Abmessungen des Drucksensors liegen bevorzugt Bereich 30 bis 35 mm Durchmesser und 40 bis 50 mm Höhe.

Die vorliegende Erfindung betrifft ferner ein System zur Abgasnachbehandlung mit wenigstens einem erfindungsgemäßen Drucksensor.

Beim erfindungsgemäßen Drucksensor nimmt das komprimierbare Volumen die Ausdehnungen des Abgasreduziermediums während des Einfrierens auf, sodass sich das Ausdehnen des Abgasreduziermediums beim Gefriervorgang nicht auf die Messzelle auswirkt. Der Drucksensor ist somit einfriersicher.

Damit eine Beschädigung des Drucksensors beim Einfrieren des Abgasreduziermediums vermieden wird, befindet sich vorzugsweise zwischen der Messzelle und der Zuleitung für das Medium ein komprimierbares Volumen, das eine Volumenänderung des Abgasreduziermediums beim Einfrieren aufnimmt. Ferner kann die Messzelle auf einem verformbaren Teil aufgebracht werden, so dass die Messzelle bei einer Volumenänderung des Abgasreduziermediums beim Einfrieren elastisch verschoben werden kann. Dadurch wirkt sich die Volumenausdehnung des Mediums beim Gefriervorgang nicht nachteilig auf die Messzelle aus. Der Drucksensor wird für Abgasreduziersysteme in Dieselmotoren von Kraftfahrzeugen eingesetzt.

Weitere Merkmale der Erfindung ergeben sich aus der Beschreibung der beiliegenden Zeichnungen.

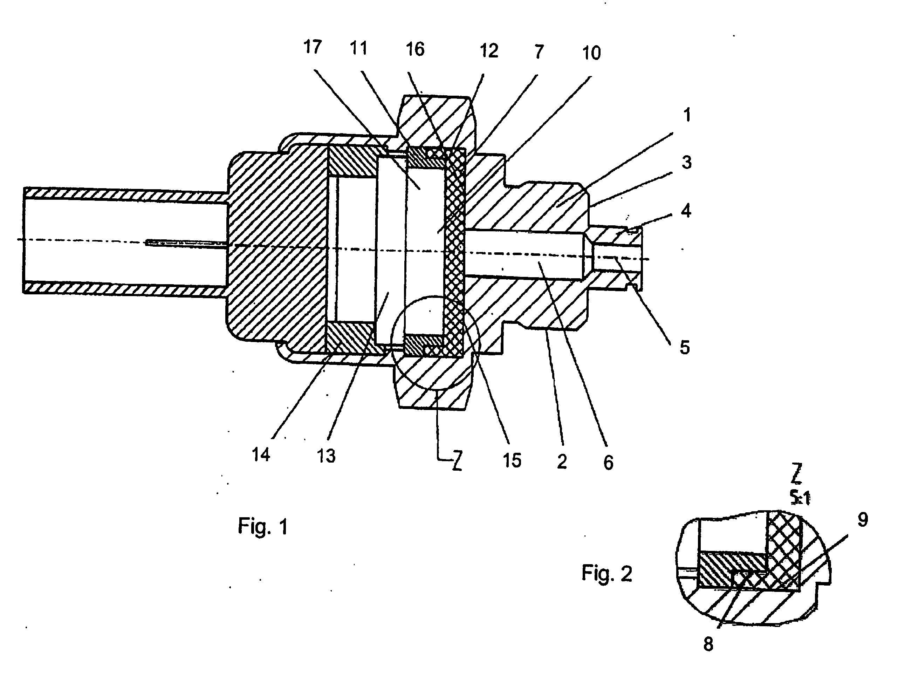

Die Erfindung wird anhand weiterer in den Zeichnungen dargestellten Ausführungsbeispiele näher erläutert. Es zeigen
- Fig. 1: im Axialschnitt einen erfindungsgemäßen Drucksensor;
- Fig. 2: in vergrößerter Darstellung die Einzelheit Z in Fig. 1;
- Fig. 3: einen Axialschnitt eines erfindungsgemäßen Drucksensors mit Balg;
- Fig.4: einen Axialschnitt eines erfindungsgemäßen Drucksensors mit Balg, Befestigung, Aufnahme und Platte;
- Fig. 5: einen Axialschnitt eines erfindungsgemäßen Drucksensors, wie in Fig. 4 dargestellt, mit Hubbegrenzung anstelle der Platte;
- Fig. 6: einen Axialschnitt eines erfindungsgemäßen Drucksensors, wie in Fig. 5 dargestellt, mit zusätzlicher Feder;
- Fig. 7: einen Axialschnitt eines erfindungsgemäßen Drucksensors, wie in Fig. 6 dargestellt, mit einer Platte anstelle der Hubbegrenzung;
- Fig. 8: einen Axialschnitt eines erfindungsgemäßen Drucksensors, wie in Fig. 3 dargestellt, mit Feder zwischen Messzelle und Gehäuse.

Der Drucksensor wird vorteilhaft in einem Abgasreduziersystem eingesetzt, mit dem Abgase von Dieselmotoren gereinigt werden. Mit dem Sensor wird der Druck einer Harnstoff-Wasser-Lösung im Abgasreduziersystem gemessen. Der Drucksensor hat ein Gehäuse 1, das mit einem Außengewinde 2 versehen ist, mit dem der Drucksensor in eine Gewindebohrung des Abgasreduziersystems geschraubt werden kann. Von der ebenen freien Stirnseite 3 des Gehäuses 1 steht mittig ein Ansatz 4 vor. Der Ansatz 4 und das Gehäuse 1 werden von einer Zuleitung in Form einer axialen Bohrung 5 und 6 durchsetzt, die einer scheibenförmigen Membran 7 gegenüberliegt. Sie hat einen umlaufenden Rand 8, der dichtend an einer Innenwand 9 eines Aufnahmeraumes 10 des Gehäuses 1 anliegt. Die Membran 7 besteht aus elastischem Material, vorzugsweise aus einem geeigneten Kunststoff, der bei der Gefriertemperatur der Hamstoff-Wasser-Lösung noch elastisch ist.

Die Abdichtung kann aber auch durch axiale Vorspannung der Membran erfolgen. Dazu liegt die Membran 7 vorteilhaft auf einem Absatz eines Bodens 15 des Aufnahmeraums 10 auf.

Die Membran 7 wird durch einen Haltering 11 axial gesichert. Er liegt ebenfalls an der Innenwand 9 des Aufnahmeraumes 10 und hat einen axial vorstehenden Ring 12, der an der Innenwandung des umlaufenden Randes 8 der Membran 7 anliegt. Der Haltering 11 kann in den Aufnahmeraum 10 eingepreßt sein. Es ist aber auch möglich, den Haltering in den Aufnahmeraum 10 zu schrauben. Durch den Haltering 11 wird die Membran 7 zuverlässig und sicher im Aufnahmeraum gehalten.

Bei Abdichtung durch axiale Verpressung der Membran 7 kann der Haltering 11 entfallen.

Die Bohrung 6, die größeren Durchmesser als die Bohrung 5 hat, liegt zentrisch in Bezug auf die Membran 7. Über die Bohrungen 5, 6 gelangt die Harnstoff-Wasser-Lösung an die Membran 7.

Alternativ kann die Bohrung 6 auch kleiner oder gleich groß im Vergleich zur Bohrung 5 sein.

Der Haltering 11 wird durch eine Messzelle 13 axial gesichert, die am Haltering anliegt und ihrerseits durch einen Sicherungsring 14 befestigt ist, der in das Gehäuse 1 eingesetzt ist.

Zwischen der Messzelle 13 und der Membran 7 befindet sich das komprimierbare Volumen 17, das Gas, vorteilhaft Luft, ist. Im Aufnahmeraum 10 ist dieses Gas druckdicht eingeschlossen. Dieses Gas ist von der Harnstoff-Wasser-Lösung in den Bohrungen 5, 6 durch die Membran 7 getrennt.

Bei tiefen Temperaturen kann die Harnstoff-Wasser-Lösung gefrieren. Dies führt zu einer Volumenvergrößerung, die bei diesem Medium bei etwa 10 % liegt. Das vor der Messzelle 13 befindliche Gasvolumen 17 im Aufnahmeraum 10 verhindert, dass durch das Ausdehnen der Harnstoff-Wasser-Lösung beim Gefrieren die Messzelle 13 beschädigt wird. Beim Einfrieren dieses Mediums wird die Belastung der Volumenausdehnung nicht direkt auf die Messzelle 13 übertragen, da das im Aufnahmeraum 10 eingeschlossene Gasvolumen wie eine Gasfeder komprimierbar ist. Die dünnwandige Membran 7 wird beim Einfrieren der Harnstoff-Wasser-Lösung elastisch in Richtung auf die Messzelle 13 verformt, wobei das eingeschlossene Gasvolumen 17 komprimiert wird. Der Aufnahmeraum 10 bzw. das darin eingeschlossene Gasvolumen 17 ist so groß, dass die durch die Volumenausdehnung der Harnstoff-Wasser-Lösung beim Gefriervorgang erfolgende Membranverformung durch eine entsprechende Komprimierung des Gasvolumens 17 aufgefangen werden kann. Die Messzelle 13 wird dadurch nicht gefährdet.

Bei normalem Betrieb des Drucksensors ist auf beiden Seiten der Membran 7 der Druck weitgehend identisch, bis auf einen geringen Fehler durch die Steifigkeit der Membran 7 bei der elastischen Auslenkung. Die Drift durch Veränderung des Gasvolumens im Aufnahmeraum 10 durch eine Temperaturänderung kann durch eine Kompensation über die gemessene Temperatur einfach ausgeglichen werden.

Die Membran 7 ist so gestaltet, dass eine große Fläche mit der Harnstoff-Wasser-Lösung beaufschlagt wird. So ist es vorteilhaft möglich, dass die Membran 7 längs ihres Umfanges auf einem Absatz des Bodens 15 des Aufnahmeraumes 10 anliegt. Dann liegt die Mündung der Bohrung 6 im Boden 15 mit geringem Abstand von der Membran 7. Es ist aber auch möglich, dass die Membran 7 mit ihrem umlaufenden vorstehenden Rand 8 so im Aufnahmeraum 10 montiert ist, dass sie geringen Abstand vom Boden 15 hat. In beiden Fällen kann somit die aus der Bohrung 6 austretende Harnstoff-Wasser-Lösung die gesamte, dem Boden 15 zugewandte Fläche 16 der Membran 7 beaufschlagen.

Der Rand 8 der Membran 7 ist im Vergleich zur Membranfläche verstärkt ausgebildet und so gestaltet, dass er fest an der Innenwand 9 des Gehäuses 1 anliegt und ein Verrutschen der Membran 7 verhindert. Zudem wird der Rand 8 der Membran 7 vom Haltering 11 in seiner Einbaulage gesichert, der seinerseits über die Zelle 13 und den Sicherungsring 14 gehalten wird.

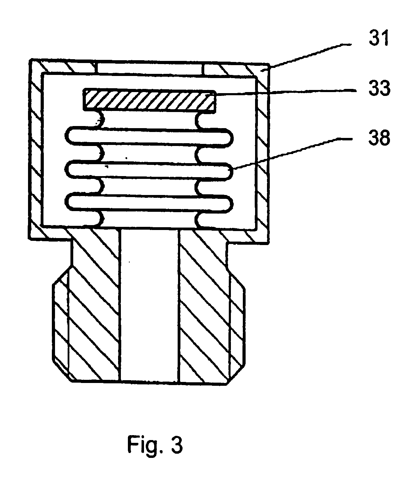

Fig. 3 zeigt einen erfindungsgemäßen Drucksensor mit Gehäuse 31, in welchem zwischen Messzelle 33 und einer Zuleitung für ein Abgasreduziermedium ein Balg 38 angeordnet ist. Dabei wird der Balg 38 einseitig von der Messzelle 33 verschlossen. Die Messzelle 33 ist mittels einer Schweißnaht am Balg 38 befestigt. Die der Messzelle 33 gegenüberliegende Öffnung des Balges 38 ist mit der Zuleitung derart verbunden, dass das Abgasreduziermedium durch die Zuleitung in das Innere des Balges fließen kann bzw. ein Druck- oder Volumenaustausch mit dem Inneren des Balges möglich ist. Der Balg 38 ist vorzugsweise mittels einer Schweißnaht am Gehäuse 31 befestigt.

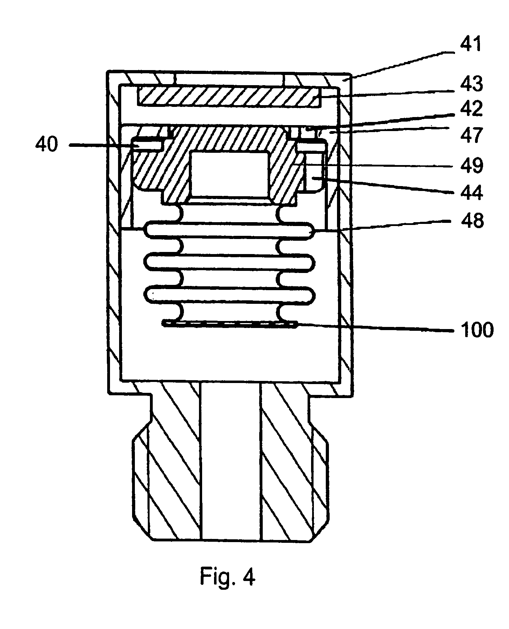

Fig. 4 zeigt einen erfindungsgemäßen Drucksensor mit einem Gehäuse 41, in welchem an der der Zuleitung gegenüberliegenden Innenfläche eine Messzelle 43 angeordnet ist. Des Weiteren ist innen an dem zylinderförmigen Gehäuse 41 eine Befestigung 47 angebracht, welche eine Aufnahme 49 trägt. Die Aufnahme 49 verschließt einseitig einen ebenfalls innerhalb des Gehäuses 41 angeordneten Balg 48, dessen zweite Öffnung von einer Platte 100 verschlossen ist. Die Befestigung 47 sowie die Aufnahme 49 weisen Ausnehmungen 42 und 44 auf. Diese, vorzugsweise als Bohrungen vorgesehenen, Ausnehmungen 42 und 44 sind zueinander fluchtend angeordnet, sodass ein Durchtritt des Abgasreduziermediums durch die Aufnahme 49 und die Befestigung 47 möglich ist. Für den Fall, dass sich die Ausnehmungen 42 und 44 während des Betriebes gegeneinander verdrehen (nicht fluchtend zueinander angeordnet sind), ist eine Nut 40 vorgesehen, welche bevorzugt als Umfangsnut ausgestaltet ist, und den sicheren Durchtritt des Abgasreduziermediums durch die Aufnahme 49 und die Befestigung 47 gewährleistet. In dieser Ausführungsform ist der Balg beidseitig geschlossen, wobei sich im Balg ein komprimierbares Fluid, vorzugsweise ein Gas, wie beispielsweise Luft, befindet. Das Abgasreduziermedium gelangt über die Zuleitung in das Gehäuse 41, kann am Balg 48 vorbei durch die Ausnehmungen 42 und 44 bis zur Messzelle 43 gelangen.

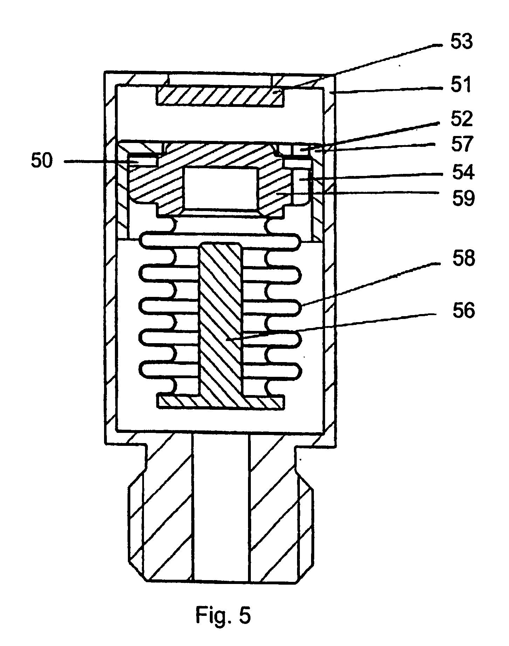

In Fig. 5 ist ein erfindungsgemäßer Drucksensor, ähnlich dem in Fig. 4 dargestellten Drucksensor, gezeigt, bei welchem anstelle der Platte eine Hubbegrenzung 56 vorgesehen ist, welche einen Balg 58 einseitig verschließt. In einem Gehäuse 51 ist, ähnlich der Anordnung von Fig. 4, eine Messzelle 53 angeordnet sowie eine Befestigung 57 und eine Aufnahme 59. Die Befestigung 57 und die Aufnahme 59 weisen jeweils eine Ausnehmung 52 und 54 auf, welche fluchtend zueinander angeordnet sind. Ebenfalls vorgesehen ist eine Nut 50, welche die gleiche Aufgabe erfüllt, wie die in Fig. 4 beschriebene Nut 40. Die Hubbegrenzung 56 hat hauptsächlich die Aufgabe, im Falle einer Betriebsdrucküberschreitung und einer damit verbundenen elastischen Verformung des Balges 58, insbesondere die Verformung in axialer Richtung des Balges 58, zu begrenzen. Die Hubbegrenzung ist dabei vorzugsweise so ausgelegt, dass die Verformung des Balges nur im elastischen Bereich erfolgen kann.

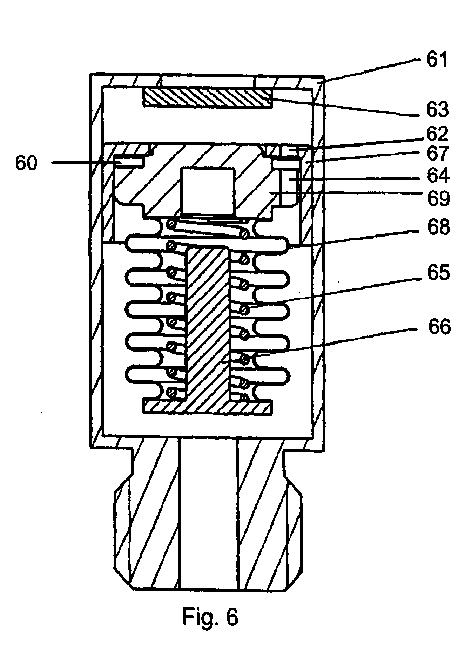

Der in Fig. 6 dargestellte Drucksensor weist, im Vergleich zu dem in Fig. 5 dargestellten Drucksensor, zusätzlich eine Feder 65 auf, welche innerhalb eines Balges 68 zwischen einer Hubbegrenzung 66 und einer Aufnahme 69 vorgesehen ist. Auch dieser Drucksensor weist ein Gehäuse 61 auf, in welchem eine Messzelle 63 angeordnet ist. Ferner ist auch in diesem Drucksensor eine Befestigung 67 mit einer Ausnehmung 62 und eine Aufnahme 69 mit einer Ausnehmung 64 vorgesehen. Ebenfalls vorgesehen ist eine Nut 60. Die Funktionen der Ausnehmungen 62 und 64 sowie der Nut 60 in Bezug auf das Abgasreduziermedium wurden bereits in Fig. 4 erläutert und gelten hier entsprechend. Die Feder 65, welche vorzugsweise in axialer Richtung innerhalb des Balges angeordnet ist, wird bevorzugt vorgespannt montiert, wobei die Vorspannung der Feder 65 gerade so groß ist, dass keine Verformung des Balges 68 bis zum Erreichen des maximalen Betriebsdrucks auftritt. Die nach Überschreiten des Betriebsdrucks auftretende elastische Verformung des Balges 68 kann durch die Feder 65 zusätzlich minimiert werden.

Eine solche Ausführungsform des erfindungsgemäßen Drucksensors mit Kombination von Hubbegrenzung und Feder innerhalb des Balges ist insbesondere geeignet für hohe Betriebsdrucküberschreitungen.

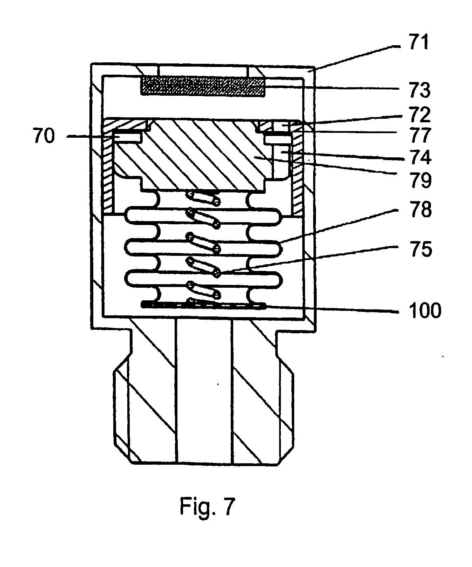

Der in Fig. 7 dargestellte Drucksensor weist, im Gegensatz zum in Fig. 6 dargestellten Drucksensor, keine Hubbegrenzung auf, sondern eine Platte 100, welche anstelle der Hubbegrenzung einen Balg 78 einseitig verschließt. Auch in der in Fig. 7 dargestellten Ausführungsform weist der Drucksensor ein Gehäuse 71 mit einer daran angebrachten Messzelle 73 auf. Ebenfalls vorgesehen sind innerhalb des Gehäuses 71 eine Befestigung 77 sowie eine Aufnahme 79 mit entsprechenden Ausnehmungen 72 und 74 sowie einer Nut 70. Innerhalb des Balges ist zudem eine Feder 75 vorgesehen, welche die gleiche Funktion wie die Feder 65 in Fig. 6 erfüllt.

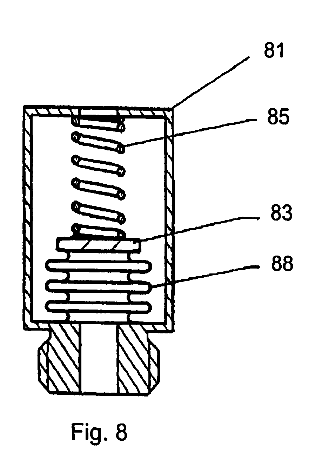

In Fig. 8 ist ein erfindungsgemäßer Drucksensor mit einem Gehäuse 81 und einer Messzelle 83, ähnlich dem Drucksensor wie in Fig. 3 dargestellt, gezeigt. Die Messzelle 83 verschließt einseitig einen Balg 88, welcher mit seiner der Messzelle gegenüberliegenden Öffnung mit dem Gehäuse 81 verbunden, vorzugsweise verschweißt, ist. Wie auch schon in Fig. 3 beschrieben, kann auch bei dieser Ausführungsform das Abgasreduziermedium durch eine Zuleitung in das Innere des Balges 88 fließen bzw. ein Volumenaustausch und/oder Druckaustausch mit dem Inneren des Balges 88 möglich sein. Zwischen Messzelle 83 und einer Innenwand des Gehäuses 81 ist eine Feder 85 vorgesehen, welche auch hier die Funktion hat, die bei Überschreiten des Betriebsdruckes auftretende elastische Verformung des Balges 88 gering zu halten bzw. einer plastischen Verformung des Balges 88 entgegenzuwirken. Die Feder 85 ist auch in dieser Ausführungsform bevorzugt vorgespannt montiert.

Allen in Fig. 3 bis 8 dargestellten Drucksensoren ist gemeinsam, dass das Drucksensorgehäuse einen Abschnitt mit Außengewinde aufweist, mit welchem der Drucksensor in eine Gewindebohrung des Abgasreduziersystems geschraubt werden kann und in welchem eine Öffnung für eine Zuleitung vorgesehen ist. Weiterhin weisen alle genannten Drucksensoren eine weitere Öffnung auf, durch welche die Messzelle mit entsprechenden Anschlußleitungen mit einer Auswerteinheit verbunden werden kann.

Der Drucksensor zeichnet sich dadurch aus, dass er den Druck der Harnstoff-Wasser-Lösung im Abgasreduziersystem des Dieselmotors zuverlässig mißt und beim Einfrieren der Harnstoff-Wasser-Lösung nicht beschädigt wird.

### Bezugszeichenliste:

- 1, 31, 41, 51, 61, 71, 81 -: Gehäuse
- 2 -: Außengewinde
- 3 -: Stirnseite
- 4 -: Ansatz
- 5,6 -: Bohrung
- 7 -: Membran
- 8 -: umlaufender Rand
- 9 -: Innenwand
- 10 -: Aufnahmeraum
- 11 -: Haltering
- 12 -: Ring
- 13, 33, 43, 53, 63, 73, 83 -: Messzelle
- 14 -: Sicherungsring
- 15 -: Boden
- 16 -: Fläche der Membran 7
- 17 -: Gasvolumen
- 38, 48, 58, 68, 78, 88 -: Balg
- 40, 50, 60, 70 -: Nut
- 42, 52, 62, 72, 44, 54, 64, 74 -: Ausnehmung
- 47, 57, 67, 77 -: Befestigung
- 49,59,69,79 -: Aufnahme
- 56, 66 -: Hubbegrenzung
- 65,75,85 -: Feder
- 100 -: Platte

## Patentansprüche

1. Drucksensor für Abgasreduziersysteme, insbesondere von Dieselmotoren, mit einem Gehäuse (1, 31, 41, 51, 61, 71, 81), in dem mindestens eine Messzelle (13, 33, 43, 53, 63, 73,83) zum Erfassen des Drucks eines Abgasreduziermediums untergebracht ist, und mit wenigstens einer Zuleitung (5, 6) für das Abgasreduziermedium, vorzugsweise eine Harnstoff-Wasser-Lösung, **dadurch gekennzeichnet, dass** zusätzlich zur Messzelle (13) und Zuleitung (5, 6) ein Balg (38, 48, 58, 68, 78, 88) vorhanden ist, welcher an komprimierbares Volumen (17) grenzt, das eine Volumenänderung des Abgasreduziermediums beim Einfrieren aufnimmt.

2. Drucksensor nach Anspruch 1, **dadurch gekennzeichnet, dass** zwischen Messzelle (13, 33, 43, 53, 63, 73, 83) und Balg (38, 48, 58, 68, 78, 88) eine Befestigung (47, 57, 67, 77) und/oder Aufnahme (49, 59, 69, 79) vorhanden ist.

3. Drucksensor nach Anspruch 2, **dadurch gekennzeichnet, dass** die Befestigung (47, 57, 67, 77) und/oder die Aufnahme (49, 59, 69, 79) durchgehende Ausnehmungen (42, 44, 52, 54, 62, 64, 72, 74) aufweisen.

4. Drucksensor nach Anspruch 2 oder 3, **dadurch gekennzeichnet, dass** die Aufnahme (49, 59, 69, 79) eine umlaufende Nut (40, 50, 60, 70) zur Fluidführung aufweist.

5. Drucksensor nach einem der vorhergehenden Ansprüche, **dadurch gekennzeichnet, dass** Mittel zur Hubbegrenzung (56, 66), insbesondere zum Schutz des Balges (58, 68), vorhanden sind.

6. Drucksensor nach einem der vorhergehenden Ansprüche, **dadurch gekennzeichnet, dass** wenigstens eine Öffnung des Balges (48, 78) eine diese Öffnung fluiddicht verschließende Platte (100) aufweist.

7. Drucksensor nach einem der vorhergehenden Ansprüche, **dadurch gekennzeichnet, dass** wenigstens eine Feder (65, 75, 85) vorhanden ist.

8. Drucksensor nach Anspruch 7, **dadurch gekennzeichnet, dass** die Feder (65, 75) zwischen der Aufnahme (69, 79) und dem Mittel zur Hubbegrenzung (66) oder zwischen der Aufnahme (69, 79) und der Platte (100) innerhalb des Balges (68, 78) vorhanden ist.

9. Drucksensor nach Ansprüchen 7 und 8, **dadurch gekennzeichnet, dass** die Feder (85) zwischen Messzelle (83) und Gehäuse (81) vorhanden ist.

10. Drucksensor nach einem der vorhergehenden Ansprüche, **dadurch gekennzeichnet, dass** das Balgmaterial aus der Gruppe: Metall, Kunststoff oder Gummi ausgewählt wird.

11. Drucksensor nach einem der vorhergehenden Ansprüche, **dadurch gekennzeichnet, dass** der Balg (38, 88) mit seiner der Zuleitung zugewandten Öffnung kraft- oder formschlüssig mit dem Gehäuse (31, 81) fluiddicht verbunden ist.

12. Drucksensor nach einem der vorhergehenden Ansprüche, **dadurch gekennzeichnet, dass** das komprimierbare Volumen (17) durch wenigstens eine Membran (7) vom Abgasreduziermedium getrennt ist.

13. Drucksensor nach einem der vorhergehenden Ansprüche, **dadurch gekennzeichnet, dass** das komprimierbare Volumen (17) ein Gasvolumen, vorzugsweise Luft, ist.

14. Drucksensor nach einem der vorhergehenden Ansprüche, **dadurch gekennzeichnet, dass** das komprimierbare Volumen (17) von der Messzelle (13) und der Membran (7) begrenzt ist.

15. Drucksensor nach einem der Ansprüche 12 bis 14, **dadurch gekennzeichnet, dass** die Membran (7) mit Abstand zur Mündung der Zuleitung (5, 6) liegt.

16. Drucksensor nach einem der vorhergehenden Ansprüche, **dadurch gekennzeichnet, dass** die Zuleitung (5, 6) mittig zur gegenüberliegenden Membranfläche liegt.

17. Drucksensor nach einem der vorhergehenden Ansprüche, **dadurch gekennzeichnet, dass** die Membran (7) mit einem verstärkten Rand (8) an einer Innenwand (9) des Gehäuses (1) anliegt.

18. Drucksensor nach einem der vorhergehenden Ansprüche, **dadurch gekennzeichnet, dass** die Membran (7) durch wenigstens ein Halteteil (11) gesichert ist.

19. Drucksensor nach Anspruch 18, **dadurch gekennzeichnet, dass** das Halteteil (11) ein Haltering ist.

20. Drucksensor nach einem der vorhergehenden Ansprüche, **dadurch gekennzeichnet, dass** das Halteteil (11) die Membran (7) im Gehäuse (1) zentriert.

21. Drucksensor nach einem der vorhergehenden Ansprüche, **dadurch gekennzeichnet, dass** das Halteteil (11) durch wenigstens ein Sicherungselement (14), vorzugsweise einen Sicherungsring, gesichert ist.

22. Drucksensor nach einem der vorhergehenden Ansprüche, **dadurch gekennzeichnet, dass** die Abdichtung durch axiale Verpressung der Membran (7) erfolgt.

23. Drucksensor nach einem der vorhergehenden Ansprüche, **dadurch gekennzeichnet, dass** die Membran (7) auf einem Absatz eines Bodens (15) eines das komprimierbare Volumen (17) enthaltenden Aufnahmeraumes (10) aufliegt.

## Claims

1. Pressure sensor for exhaust gas reduction systems, in particular of diesel engines, having a housing (1, 31, 41, 51, 61, 71, 81), in which at least one measuring cell (13, 33, 43, 53, 63, 73, 83) for measuring the pressure of an exhaust gas reduction medium is accommodated, and having at least one feed line (5, 6) for the exhaust gas reduction medium, preferably a urea-water solution, **characterized in that** in addition to the measuring cell (13) and feed line (5, 6) bellows (38, 48, 58, 68, 78, 88) are provided, which border compressible volume (17), which takes up a change of volume of the exhaust gas reduction medium in the event of freezing.

2. Pressure sensor according to claim 1, **characterized in that** between measuring cell (13, 33, 43, 53, 63, 73, 83) and bellows (38, 48, 58, 68, 78, 88) there is a fastening (47, 57, 67, 77) and/or receiver (49, 59, 69, 79).

3. Pressure sensor according to claim 2, **characterized in that** the fastening (47, 57, 67, 77) and/or the receiver (49, 59, 69, 79) have continuous recesses (42, 44, 52, 54, 62, 64, 72, 74).

4. Pressure sensor according to claim 2 or 3, **characterized in that** the receiver (49, 59, 69, 79) has a circumferential groove (40, 50, 60, 70) for carrying fluid.

5. Pressure sensor according to one of the preceding claims, **characterized in that** stroke-limiting means (56, 66) are provided, in particular for protecting the bellows (58, 68).

6. Pressure sensor according to one of the preceding claims, **characterized in that** at least one opening of the bellows (48, 78) has a plate (100) that closes said opening in a fluid-tight manner.

7. Pressure sensor according to one of the preceding claims, **characterized in that** at least one spring (65, 75, 85) is provided.

8. Pressure sensor according to claim 7, **characterized in that** the spring (65, 75) is provided between the receiver (69, 79) and the stroke-limiting means (66) or between the receiver (69, 79) and the plate (100) inside the bellows (68, 78).

9. Pressure sensor according to claims 7 and 8, **characterized in that** the spring (85) is provided between measuring cell (83) and housing (81).

10. Pressure sensor according to one of the preceding claims, **characterized in that** the bellows material is selected from the group: metal, plastics material or rubber.

11. Pressure sensor according to one of the preceding claims, **characterized in that** the bellows (38, 88) are non-positively or positively connected by their opening facing the feed line in a fluid-tight manner to the housing (31, 81).

12. Pressure sensor according to one of the preceding claims, **characterized in that** the compressible volume (17) is separated by at least one diaphragm (7) from the exhaust gas reduction medium.

13. Pressure sensor according to one of the preceding claims, **characterized in that** the compressible volume (17) is a gas volume, preferably air.

14. Pressure sensor according to one of the preceding claims, **characterized in that** the compressible volume (17) is delimited by the measuring cell (13) and the diaphragm (7).

15. Pressure sensor according to one of claims 12 to 14, **characterized in that** the diaphragm (7) is situated with clearance relative to the mouth of the feed line (5, 6).

16. Pressure sensor according to one of the preceding claims, **characterized in that** the feed line (5, 6) is situated centrally relative to the opposite diaphragm surface.

17. Pressure sensor according to one of the preceding claims, **characterized in that** the diaphragm (7) lies with a reinforced edge (8) against an inner wall (9) of the housing (1).

18. Pressure sensor according to one of the preceding claims, **characterized in that** the diaphragm (7) is secured by means of at least one retaining part (11).

19. Pressure sensor according to claim 18, **characterized in that** the retaining part (11) is a retaining ring.

20. Pressure sensor according to one of the preceding claims, **characterized in that** the retaining part (11) centres the diaphragm (7) in the housing (1).

21. Pressure sensor according to one of the preceding claims, **characterized in that** the retaining part (11) is secured by means of at least one locking element (14), preferably a locking ring.

22. Pressure sensor according to one of the preceding claims, **characterized in that** the sealing is effected by axial compression of the diaphragm (7).

23. Pressure sensor according to one of the preceding claims, **characterized in that** the diaphragm (7) rests on a shoulder of a base (15) of a location space (10) containing the compressible volume (17).

## Revendications

1. Capteur de pression pour systèmes de réduction de gaz d'échappement, notamment de moteurs diesel, doté d'un boîtier (1, 31, 41, 51, 61, 71, 81) dans lequel au moins une cellule de mesure (13, 33, 43, 53, 63, 73, 83) est disposée pour détecter la pression d'un agent de réduction de gaz d'échappement et d'au moins une conduite d'amenée (5, 6) d'agent de réduction de gaz d'échappement, de préférence une solution aqueuse d'urée,
**caractérisé en ce qu'**un soufflet (38, 48, 58, 68, 78, 88) est prévu en plus de la cellule de mesure (13) et de la conduite d'amenée (5, 6), ledit soufflet délimitant un volume comprimé (17) absorbant une variation de volume de l'agent de réduction de gaz d'échappement en cas de gel.

2. Capteur de pression selon la revendication 1, **caractérisé en ce qu'**une fixation (47, 57, 67, 77) et/ou un logement (49, 59, 69, 79) sont situés entre la cellule de mesure (13, 33, 43, 53, 63, 73, 83) et le soufflet (38, 48, 58, 68, 78, 88).

3. Capteur de pression selon la revendication 2, **caractérisé en ce que** la fixation (47, 57, 67, 77) et/ou le logement (49, 59, 69, 79) comportent des évidements (42, 44, 52, 54, 62, 64, 72, 74) traversants.

4. Capteur de pression selon la revendication 2 ou 3,
**caractérisé en ce que** le logement (49, 59, 69, 79) comporte une rainure (40, 50, 60, 70) circonférentielle pour guider le fluide.

5. Capteur de pression selon l'une quelconque des revendications précédentes, **caractérisé en ce qu'**un moyen de délimitation de course (56, 66) est prévu, notamment pour protéger le soufflet (58, 68).

6. Capteur de pression selon l'une quelconque des revendications précédentes, **caractérisé en ce qu'**au moins une ouverture du soufflet (48, 78) comporte une plaque (100) fermant cette ouverture de façon étanche au fluide.

7. Capteur de pression selon l'une quelconque des revendications précédentes, **caractérisé en ce qu'**au moins un ressort (65, 75, 85) est prévu.

8. Capteur de pression selon la revendication 7, **caractérisé en ce que** le ressort (65, 75) est disposé entre le logement (69, 79) et le moyen de délimitation de course (66) ou entre le logement (69, 79) et la plaque (100) à l'intérieur du soufflet (68, 78).

9. Capteur de pression selon les revendications 7 et 8,
**caractérisé en ce que** le ressort (85) est disposé entre la cellule de mesure (83) et le boîtier (81).

10. Capteur de pression selon l'une quelconque des revendications précédentes, **caractérisé en ce que** le matériau du soufflet est sélectionné parmi le groupe comprenant le métal, le plastique ou le caoutchouc.

11. Capteur de pression selon l'une quelconque des revendications précédentes, **caractérisé en ce que** le soufflet (38, 88) est relié au boîtier (31, 81) de façon étanche au fluide, par complémentarité de forme ou de force, au moyen de son ouverture orientée vers la conduite d'amenée.

12. Capteur de pression selon l'une quelconque des revendications précédentes, **caractérisé en ce que** le volume (17) compressible est séparé de l'agent de réduction de gaz d'échappement par au moins une membrane (7).

13. Capteur de pression selon l'une quelconque des revendications précédentes, **caractérisé en ce que** le volume (17) compressible est un volume de gaz, de préférence d'air.

14. Capteur de pression selon l'une quelconque des revendications précédentes, **caractérisé en ce que** le volume (17) compressible est limité par la cellule de mesure (13) et par la membrane (7).

15. Capteur de pression selon l'une quelconque des revendications 12 à 14, **caractérisé en ce que** la membrane (7) se trouve à une certaine distance de l'embouchure de la conduite d'amenée (5, 6).

16. Capteur de pression selon l'une quelconque des revendications précédentes, **caractérisé en ce que** la conduite d'amenée (5, 6) se trouve au milieu de la surface de membrane opposée.

17. Capteur de pression selon l'une quelconque des revendications précédentes, **caractérisé en ce que** la membrane (7) repose avec un bord renforcé (8) contre une paroi intérieure (9) du boîtier (1).

18. Capteur de pression selon l'une quelconque des revendications précédentes, **caractérisé en ce que** la membrane (7) est fixée à l'aide d'au moins une partie de maintien (11).

19. Capteur de pression selon la revendication 18, **caractérisé en ce que** la partie de maintien (11) est une bague de maintien.

20. Capteur de pression selon l'une quelconque des revendications précédentes, **caractérisé en ce que** la partie de maintien (11) centre la membrane (7) dans le boîtier (1).

21. Capteur de pression selon l'une quelconque des revendications précédentes, **caractérisé en ce que** la partie de maintien (11) est fixée à l'aide d'au moins un élément de fixation (14), de préférence une bague de fixation.

22. Capteur de pression selon l'une quelconque des revendications précédentes, **caractérisé en ce que** l'étanchéité se produit par compression axiale de la membrane (7).

23. Capteur de pression selon l'une quelconque des revendications précédentes, **caractérisé en ce que** la membrane (7) repose sur un épaulement d'un fond (15) d'un espace de logement (10) contenant le volume (17) compressible.
